# EUROPEAN PATENT SPECIFICATION

(11) **EP 1 159 789 B1**
(45) Date of publication and mention of the grant of the patent: **22.10.2003**
(21) Application number: 00903018.0
(22) Date of filing: 17.01.2000
(51) Int. Cl.: H04B 3/00, H04B 13/00, G02B 6/44

(54) **MODULAR CABLE AND MODULAR FIBRE ACCESS SYSTEM**
MODULARKABEL UND MODULARES FASERZUGANGSSYSTEM
CABLE MODULAIRE ET SYSTEME D'ACCES PAR FIBRES MODULAIRES

(30) Priority: 18.01.1999 NL 1011054
(43) Date of publication of application: 05.12.2001
(73) Proprietor: Infraconcepts Netherlands N.V., 4817 ZL Breda (NL)
(72) Inventor: VAN BECKEVOORT, Guy, NL-4817 ZL Breda (NL)
(74) Representative: De Hoop, Eric
(86) International application number: NL0000030
(87) International publication number: WO00042714

(56) References cited:
- EP-A- 0 853 249
- EP-A- 0 893 722
- DE-A- 2 818 656
- US-A- 5 778 116

## Description

The present invention relates to a modular cable and a modular fibre access system for fibre to the door (FTTD)/fibre to the home (FTTH) solutions, in particular but not restricted to applications in the telecommunication field.

European Patent Application 0 853 249 discloses a fibre optic distribution cable containing a number of optical fibres.

Since the introduction of fibre optic cables and systems in the access network, there is an urgent need for a modular fibre system which can easily be designed and manufactured.

The present invention provides an answer to most of the problems regarding the deployment of a fibre system as well as regarding the powering of the optical outside plant.

The invention provides a modular cable as described in the attached claims. In addition the invention provides a FTTH and/or a FTTD network as described in the attached claims.

The modular cable according to the present invention for example used for FTTH and FTTD solutions, comprises a micro-tubing system having a first number of inner tubes, e.g. six, and a second number of outer micro tubes, e.g. twenty-four, which have a smaller diameter than the inner tubes.

The basic idea is that the system can be used in a star or a loop distribution topology. In the start-up phase the customers can be connected directly using the outer micro tubes. Once a predetermined threshold number of customers is reached, the system can be divided in different fictive distribution parts: here the customers are connected directly from different node points. Each of the node points can serve a maximum of twice the number of outer micro tubes, e.g. two times twenty-four customers.

In a FTTH network topology the node points consist of a passive splicing point where the fibres -coming from the primary network point- by use of the in the primary fibre optic tubes installed -e.g. the twelve- fibre bundle, is spliced into the two-fibre bundle that is installed from the node point to the costumer by using the outer micro tube.

In the FTTD network topology the node point is the branch out point for terminating the primary fibre bundle in the outdoor equipment cabinet. From this cabinet the necessary connections are made to the costumers by use of the copper twisted pair cables in the outer layer of the cable as in a traditional copper system.

Besides the fibre optic/copper solutions that are offered by the modular system, also an easy to plan, to design and to engineer solution is offered for the powering problem in the optical plant.

In the FTTD solution the central tube is replaced by a power cable that typically consists of a 4*16 mm² power cable. In the node point a brancheout to the equipment cabinet is realised where a DC/DC conversion takes place.

In the case of a FTTH solution the existing copper cables are spliced to the power cables in the node point. The DC/DC conversion takes place in the Optical Node Unit (ONU) that is placed in the costumer location.

In both cases the battery backup is located in the central primary access node. In this way an operational system is realised.

The present invention is by way of example only described with reference to the drawings.

Figure 1 schematically shows a cross-section of a modular cable according to the present invention.

Figure 2 schematically shows a part of a fibre to the home network according to the invention.

Figure 3 schematically shows a part of a fibre to the door network according to the invention.

Figure 4 schematically shows an example of a network departing from a primary access node towards several customers, with the use of node points.

Figure 5 shows a telecom network.

Figure 6 shows a network in a second stage.

Figure 7 shows a total network diagram.

Figure 8 shows a network with six central tubes and twenty-four quad copper pairs.

Figure 9 shows a network with remote powering.

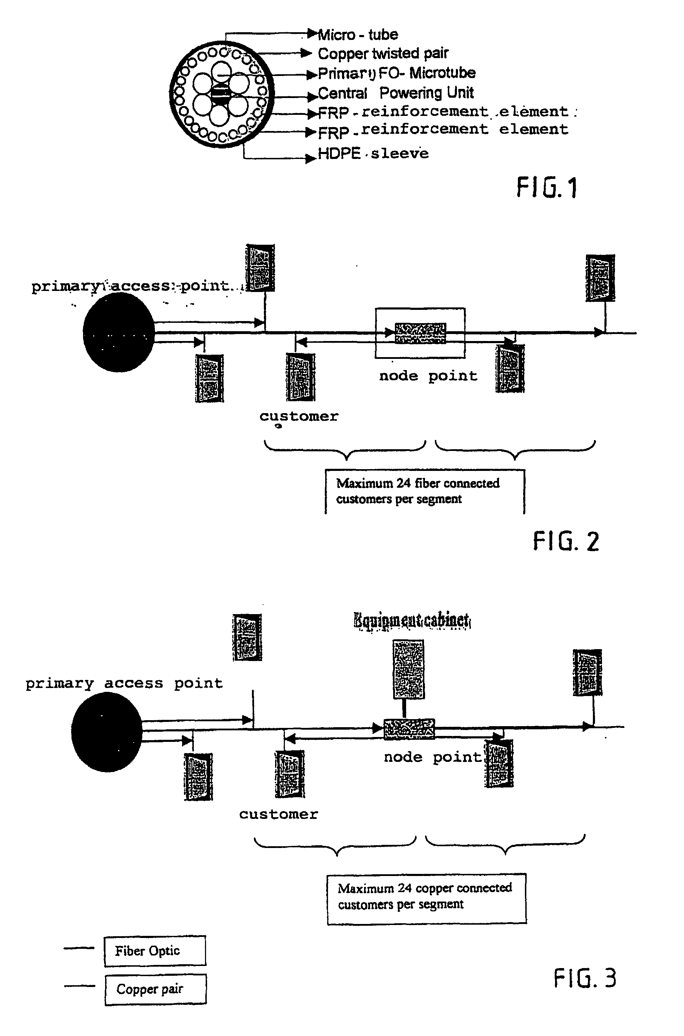

Figure 1 schematically shows a cross-section of a modular cable according to the present invention. The modular cable comprises a micro-tubing system having a first number of inner fibre optic tubes (the primary FO-micro tube) and a second number of outer fibre optic micro tubes which have a smaller diameter than the inner fibre optic tubes. A third number of copper twisted pair cables is preferably positioned between the outer fibre optic micro tubes. The first number of inner fibre optic tubes comprises a central fibre optic tube, which can be replaced by a power cable. The modular cable has an outer HDPE cover layer. A reinforcement layer is preferably positioned 4 between the inner fibre optic tubes and the outer fibre optic micro tubes, and a further reinforcement layer is positioned between the outer fibre optic micro tubes and the outer HDPE cover layer. Although any number may be chosen for the first and second number, preferably the first number is six and the second number preferably is twenty four. Preferably each of the inner fibre optic tubes comprises a fourth number of fibre bundles, said fourth number being twelve, for example.

Figure 2 schematically shows a part of a fibre to the home network according to the invention. Said FTTH network comprises a modular cable as described above, and a number of node points, wherein a two fibre bundle is installed between the node point and a customer home. Each of the node points consists of a passive splicing point where the fibres coming from the primary network point by use of the in the primary fibre optic tubes installed -e.g. twelve- fibre bundle is spliced to the two-fibre bundle that is installed from the node point to the costumer by using the outer micro tube.

Figure 3 schematically shows a part of a fibre to the door network according to the invention. Said FTTD network comprises a modular cable as described above and an outdoor equipment cabinet. A node point is the branchout point for terminating the primary inner fibre bundle in the outdoor equipment cabinet, necessary connections being made from said cabinet to the customer by use of copper twisted pair cables in the outer layer of fibre optic micro tubes.

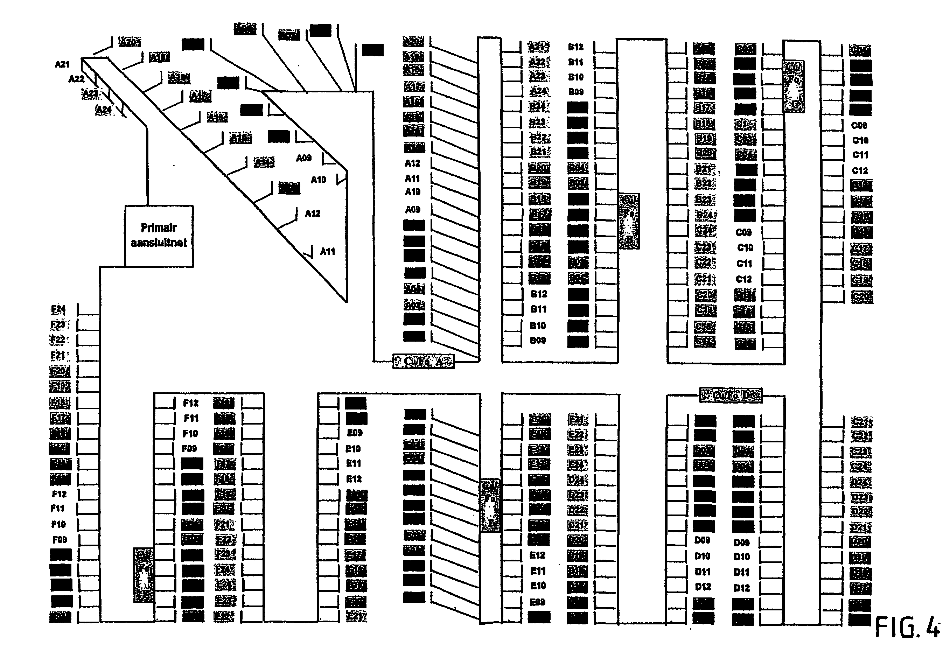

Figure 4 schematically shows an example of a network departing from a primary access node towards several customers, with the use of node points. Each of the networks preferably comprises a central primary access node, a battery backup being located in the central primary access node. In this situation the network is still operational when there is a power cut. There is also provided for redundancy so that a particular costumer can be reached by the central primary access node from two different sides.

The present invention thus relates to an integrated network concept for fibre to the home, fibre to the door and also fibre to pavement network architectures in the connection net, having a migration model for glazing the network together with powering the network equipment in the network.

The biggest problem for network operators in the field of telecom is the decision regarding the investments in the connection network: said investments have to be aimed at the realisation of a network having a high-quality full service.

To that end a choice has to be made between building a copper network or an optical network or a combination of both techniques. The advantages of both networks are known.

The decision which of these networks is chosen is based on economic factors, as well as on the expected services to be delivered via the network.

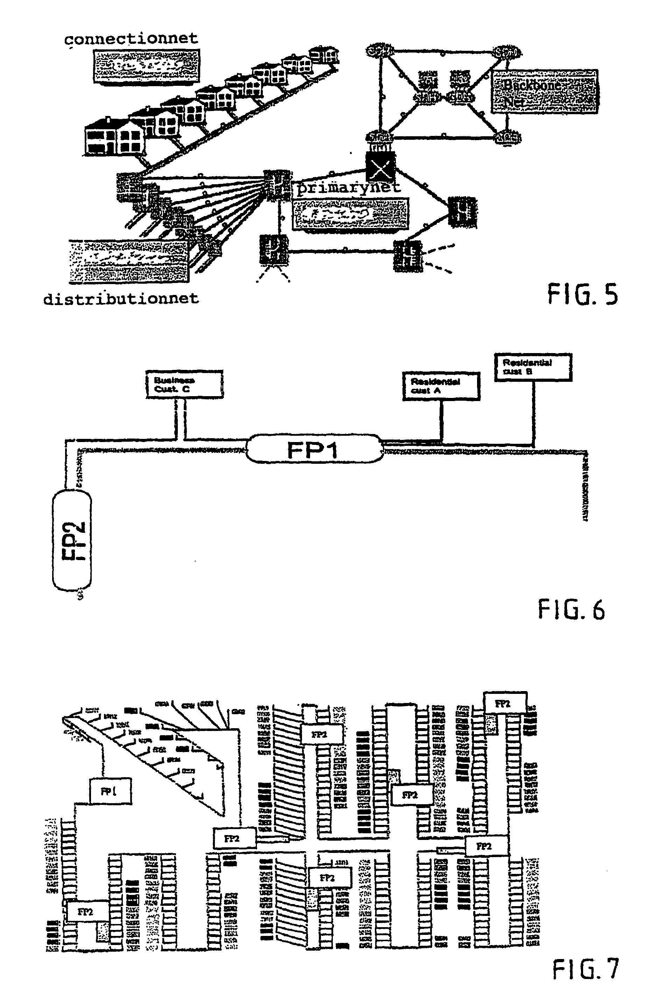

Today's telecom network looks as shown in figure 5 and consists of an SDH backbone network having a large capacity (optical network). The primary connection net (optical network) is coupled thereto which primary connection net takes care of the link to the customers via the connection network. Said connection network is either a copper network or an optical network.

The physical design of this network mainly consists of the use of on the one hand optical fibre cables having a capacity varying from typically 10 to maximally 196 fibres a cable. Branchouts on said cables are realised via installation of branchout welds on this cable, in inspection holes at preplanned locations.

On the other hand traditional copper cables are still used for the "final kilometre". Said copper cables are predominantly symmetrical pair cables having a capacity varying from 20 to 200 pairs in the connection net and from 200 to 2000 pairs in the powering network.

Powering in this network always takes place on the basis of "local powering": locally a 220/380 Volt connection is required from the utility services concerned. Onto said connection the conversion to the 48 Volt telecom powering is subsequently locally realised together with the necessary battery back-up.

The inventive network concept (called FoCuS) in the connection net, for FTT home/customer solution, mainly comes down to the fact that a solution is offered for the various options of an operator. With this system a combination is made of a pure optical connection net with a remote powering of equipment installed with the customer - the ONU (Optical Network Unit).

Inherent to the system is the possibility via FoCuS to migrate modular cables from a network solution based on a purely copper network to the connection of "small enterprise" customers via an optical connection and subsequently from this to an optical mixture of fibre from the enterprise and fibre to the door for residential customers in the same area. In each stage of said migration remote power together with the modularity is provided until with the customer.

As starting point the FoCuS network with full service system consists of a single modular cable in which a distinction is made between the outer micro tubes used for the customer connections immediately at the level of the customer and the central micro tubes of a larger diameter which are used as "power"tubes in the connection system. The core for instance consists of a power cable which is able to power all network and/or customer equipment in loop and star structure.

In this manner connecting customers in the first stage can be migrated from via the use of the inner tubes directly from the primary access point FP1 to the realisation of an FP2 point.

The realisation of an OPTICAL customer connection in stage 1 takes place directly from FP1 to the customer: to that end 1 micro tube of the outer layer is used after which a 2/4 fibre bundle is blown in to the customer, connected onto the fibre of the power tube in flexibility point 1 and/or 2.

In a second stage this network can then be expanded with the realisation of an FP3 and following, without the active system on which the customers are in service, is being hindered. Said stage is certainly deployed when in the first stage the maximum number of possible customer connections is reached: in the present system said maximum number of customers is 24. Said action takes place by the intermediary positioning of flexibility point (FP) which is individually and optionally powered in loop via the central micro tubes of larger diameter. In here fibre bundles are present of larger capacity which serve as primary distribution fibres. From FPs, as described in figure 6, the separate 2/4 fibre bundle is installed to the individual customers. As already mentioned a weld is made in each FP as in the traditional cable system, which weld connects the multiple fibre bundles to the individual 2/4 fibre bundle. In a total network diagram this may look as shown in figure 7. After practical realisation this means that per distribution loop/star a maximum connection possibility of: 6 central tubes for powering FP 2*2 directions distribution * 24 customers per distribution side + 24 customers * 2 from FP1 = 336 customers.

In the inventive network concept in the connection net, for the FTT door/cabinet solution, this network topology is of particular great value to the connection of residential customers, the optical network is brought as close to the customer as is economic-technically sound. In practice this means that per street/region of 40 to 50 customers an optical fibre bundle is supplied of typically twelve fibres via the central tubes. On this concentration point the change from optical to electric signal is taken care of at equipment level which is situated at the level of the FP in a street cabinet. From FP2 in this case the symmetrical 2/3 Cu cables which are situated in the free space between the outer micro fibres, are connected to the respective customers on one side and the equipment (ONU) in the street cabinet on the other side.

As simultaneously with the Cu connection an empty micro tube is brought in with the customer, a migration from copper to optical FTTH network can be directly implemented with only installation of an individual optical bundle and re-using the existing copper pair as remote powering network.

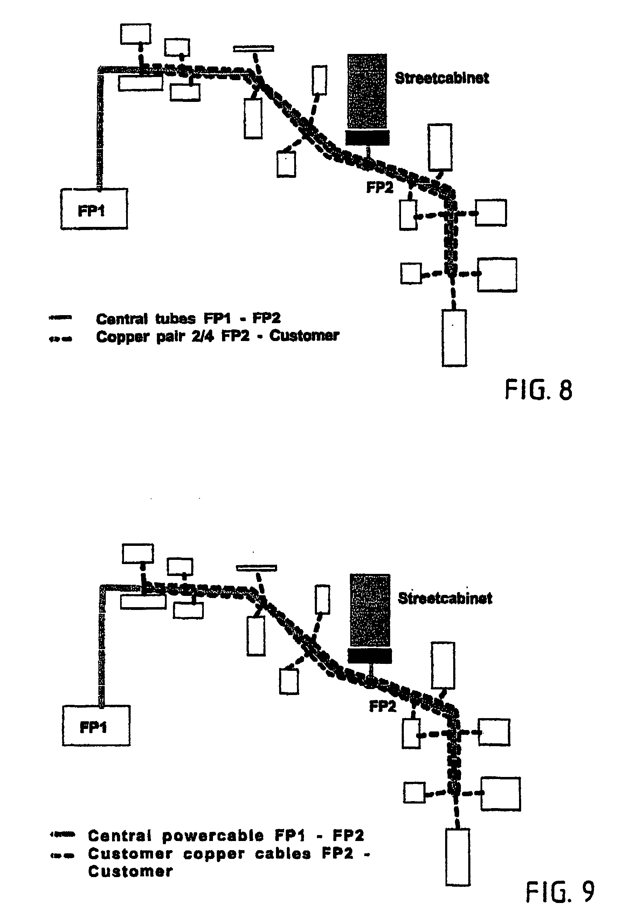

In this way an enormous flexibility regarding planning and realisation level arises. Like with the FTTH part the number of customer connections is limited by the number of tubes. In case of 6 central tubes of 24 quad copper pairs in the outer sleeve this means a connection possibility of FP1 of 6 central tubes for powering FP 2*2 directions distribution * 24 customers per distribution side + 24 customers * 2 from FP 1 = 336 customers (see figure 8).

The inventive network concept in the connection net has advantages as regards remote powering (see figure 9). One of the most important obstacles in the operational, economic and strategic field is the powering of such optical networks. In the present optical networks almost only local powering is used. In the FoCuS network concept the powering problem is solved at the same time as the problem of the customer connections.

The central element of the modular cable system regards the power cable of for instance 4 * 16 mm². In practice this means that for FTTD applications FP2s with a use of on average 160 Watt can be powered over a distance of typically 1.5 km which is amply sufficient in the connection network.

In case of a FTTH application via the same 16 mm² power cable which at the level of the branchout point FP2 is extended to the copper pair/quad, is brought in with the customer. Per copper pair typically a currency of 3.5 A can be transported which is amply sufficient to power the ONUs at customer level.

The present invention therefore among others provides the following advantages:
1. Network concept which can be completely modulated integrated star and/or loop-shaped architecture.
2. Migration path to FTTH from FTTD/C application.
3. Solution for the powering problem of an optical network.
4. Completely integrated planning and engineering solution.
5. Future-safe.
6. Quick deployment guaranteed.
7. Cost-effective.

## Claims

1. Modular cable, for example for use in FTTH and FTTD networks, **characterised in that** the modular cable comprises a micro-tubing system having a first number of inner fibre optic tubes and a second number of outer fibre optic micro tubes which have a smaller diameter than the inner fibre optic tubes and are located radially outwardly of the inner tubes.

2. Modular cable according to claim 1, wherein a third number of copper twisted pair cables is positioned between the outer fibre optic micro tubes.

3. Modular cable according to claim 1 or 2, wherein the first number of inner fibre optic tubes comprises a central fibre optic tube.

4. Modular cable according to claim 3, wherein the central fibre optic tube is replaced by a power cable.

5. Modular cable according to any one of the preceding claims, wherein a reinforcement layer is positioned between the inner fibre optic tubes and the outer fibre optic micro tubes.

6. Modular cable according to any one of the preceding claims, wherein the modular cable has an outer HDPE cover layer.

7. Modular cable according to claim 6, wherein a further reinforcement layer is positioned between the outer fibre optic micro tubes and the outer HDPE cover layer.

8. Modular cable according to any one of the preceding claims, wherein the first number is six and the second number is twenty four.

9. Modular cable according to any one of the preceding claims, wherein each of the inner fibre optic tubes comprises a fourth number of fibre bundles.

10. Modular cable according to claim 9, wherein the fourth number is twelve.

11. FTTH network comprising a modular cable according to any one of the preceding claims and a number of node points, wherein a two fibre bundle is installed between the node points and a customer home.

12. FTTH network according to claim 11, wherein each of the node points consists of a passive splicing point where the fibres coming from a primary network point by use of the in a primary 'fibre optic tubes installed -e.g. twelve- fibre bundle is spliced to the two-fibre bundle that is installed from the node point to the customer by using the outer micro tube (figure 2).

13. FTTD network comprising a modular cable according to any one of the preceding claims 1 to 10, and an outdoor equipment cabinet.

14. FTTD network according to claim 13, wherein a node point is the branchout point for terminating a primary inner fibre bundle in the outdoor equipment cabinet, necessary connections being made from said cabinet to the customer by use of copper twisted pair cables in the outer layer of fibre optic micro tubes (figure 3).

15. Network according to any one of the preceding claims 11 to 14, wherein the network comprises a central primary access node, a battery backup being located in the central primary access node.

## Patentansprüche

1. Modularkabel, zum Beispiel zur Benutzung in FTTH und FTTD-Netzwerken, **dadurch gekennzeichnet, daß** das Modularkabel ein Mikrorohrsystem mit einer ersten Anzahl von inneren faseroptischen Röhren und mit einer zweiten Anzahl von außeren faseroptischen Mikroröhren, die einen kleineren Diameter als die inneren faseroptischen Röhre haben und die radial außer der inneren Röhre gelegen sind.

2. Modularkabel nach Anspruch 1, worin eine dritte Anzahl von getwistetem Paar Kupferkabel zwischen den außeren faseroptischen Mikroröhren angeordnet ist.

3. Modularkabel nach Anspruch 1 oder 2, worin die erste Anzahl von inneren faseroptischen Röhren ein zentrales faseroptisches Rohr umfaßt.

4. Modularkabel nach Anspruch 3, worin das zentrale faseroptische Rohr durch ein Netzkabel ersetzt worden ist.

5. Modularkabel nach einem der vorhergehenden Ansprüche, worin eine Verstärkungsschicht zwischen den inneren faseroptischen Röhren und den außeren faseroptischen Mikroröhren angeordnet ist.

6. Modularkabel nach einem der vorhergehenden Ansprüche, worin das Modularkabel eine außere HDPE-Beschichtung hat.

7. Modularkabel nach Anspruch 6, worin eine weitere Verstärkungsschicht zwischen den außeren faseroptischen Mikroröhren und der außeren HDPE-Beschichtung angeordnet ist.

8. Modularkabel nach einem der vorhergehenden Ansprüche, worin die erste Anzahl sechs und die zweite Anzahl vierundzwanzig ist.

9. Modularkabel nach einem der vorhergehenden Ansprüche, worin jedes der inneren faseroptischen Röhre eine vierte Anzahl von Faserbündeln umfaßt.

10. Modularkabel nach Anspruch 9, worin die vierte Anzahl zwölf ist.

11. FTTH-Netzwerk umfassend ein Modularkabel nach einem der vorhergehenden Ansprüche, und eine Anzahl von Knotenpunkten, worin ein Zweifaserbündel zwischen dem Knotenpunkt und einem Haus eines Kunden montiert ist.

12. FTTH-Netzwerk nach Anspruch 11, worin jeder der Knotenpunkte aus einem passiven Spleißpunkt besteht, wo die Faser aus dem primären Netzwerkpunkt kommend durch Benutzung der in den ersten faseroptischen Röhren montierten, zum Beispiel zwölf, Faserbündel nach einem Zweifaserbündel gespleißt werden, das von dem Knotenpunkt zu dem Kunden durch Benutzung des außeren Mikrorohrs montiert wird (Figur 2).

13. FTTD-Netzwerk umfassend ein Modularkabel nach einem der vorhergehenden Ansprüche 1 - 10, und einen im Freien angeordeneten Ausrüstungskasten.

14. FTTD-Netzwerk nach Anspruch 13, worin ein Knotenpunkt der Abzweigpunkt zum Beenden des primären inneren Faserbündels in dem im Freien angeordneten Ausrüstungskasten ist, wobei notwendige Verbindungen von dem Kasten zu dem Kunden durch Benutzung von getwistetem Paar Kupferkabel in der außeren Schicht der faseroptischen Mikroröhre gemacht werden (Figur 3).

15. Netzwerk nach einem der vorhergehenden Ansprüche 11 - 14, worin das Netzwerk einen zentralen primären Zugangsknotenpunkt umfaßt, wobei eine Batteriereserve in dem zentralen primären Zugangsknotenpunkt angeordnet ist.

## Revendications

1. Câble modulaire, par exemple pour utilisation dans des réseaux FTTH (fiber to the home, fibre jusqu'au domicile) et FFTD (fiber to the door, fibre jusqu'à la porte), **caractérisé en ce que** le câble modulaire comprend un système à micro-tubes comportant un premier nombre de tubes internes de fibres optiques et un deuxième nombre de micro-tubes externes de fibres optiques, qui ont un plus petit diamètre que les tubes internes de fibres optiques et qui se trouvent radialement à l'extérieur des tubes internes.

2. Câble modulaire selon la revendication 1, dans lequel un troisième nombre de câbles à paires torsadés en cuivre se trouve entre les micro-tubes externes à fibres optiques.

3. Câble modulaire selon la revendication 1 ou 2, dans lequel le premier nombre de tubes internes de fibres optiques comprend un tube central à fibres optiques.

4. Câble modulaire selon la revendication 3, dans lequel le tube central de fibres optiques est remplacé par un câble électrique.

5. Câble modulaire selon l'une quelconque des revendications précédentes, dans lequel une couche de renforcement se trouve entre les tubes internes de fibres optiques et les micro-tubes externes de fibres optiques.

6. Câble modulaire selon l'une quelconque des revendications précédentes, dans lequel le câble modulaire comporte une couche externe à gaine en PEHD.

7. Câble modulaire selon la revendication 6, dans lequel une couche de renforcement supplémentaire se trouve entre les micro-tubes externes à fibres optiques et la couche externe à gaine en PEHD.

8. Câble modulaire selon l'une quelconque des revendications précédentes, dans lequel le premier nombre vaut six et le deuxième nombre vaut vingt quatre.

9. Câble modulaire selon l'une quelconque des revendications précédentes, dans lequel chacun des tubes internes de fibres optiques comprend un quatrième nombre de faisceaux de fibres.

10. Câble modulaire selon la revendication 9, dans lequel le quatrième nombre vaut douze.

11. Réseau FTTH comprenant un câble modulaire selon l'une quelconque des revendications précédentes et un certain nombre de points nodaux, dans lequel un faisceau à deux fibres est installé entre les points nodaux et un foyer de consommateur.

12. Réseau FTTH selon la revendication 11, dans lequel chacun des points nodaux est constitué d'un point à raccordement passif, où arrivent les fibres provenant d'un point de réseau primaire, au moyen des tubes à fibres optiques primaires installés - par exemple douze - le faisceau de fibres est raccordé au faisceau à deux fibres installé entre le point nodal et le consommateur en utilisant le micro-tube externe (figure 2).

13. Réseau FTTD comprenant un câble modulaire selon l'une quelconque des revendications 1 à 10, et une armoire d'équipement extérieur.

14. Réseau FTTD selon la revendication 13, dans lequel un point nodal est le point de branchement permettant de terminer un faisceau primaire de fibres internes dans une armoire d'équipement extérieur, des connexions nécessaires étant réalisées entre ladite armoire et le consommateur, au moyen de câbles à paires torsadés en cuivre, dans la couche externe de micro-tubes de fibres optiques (figure 3).

15. Réseau selon l'une quelconque des revendications 11 à 14, dans lequel le réseau comprend un noeud central d'accès primaire, une batterie de secours se trouvant dans le noeud central d'accès primaire.
